# EUROPÄISCHE PATENTSCHRIFT

(11) **EP 1 933 174 B1**
(45) Veröffentlichungstag und Bekanntmachung des Hinweises auf die Patenterteilung: **24.08.2016**
(21) Anmeldenummer: 07023851.4
(22) Anmeldetag: 10.12.2007
(51) Int. Cl.: G01V 8/20

(54) **Lichtgitter**
Light grid
Barrière lumineuse

(30) Priorität: 15.12.2006 DE 102006059322
(43) Veröffentlichungstag der Anmeldung: 18.06.2008
(73) Patentinhaber: Leuze electronic GmbH + Co. KG, 73277 Owen/Teck (DE)
(72) Erfinder: Lohmann, Lutz, Dr., 82140 Olching (DE); Tkach, Gennadiy, 81373 München (DE); Koperski, Joachim, 85579 Neubiberg (DE)
(74) Vertreter: Ruckh, Rainer Gerhard

(56) Entgegenhaltungen:
- EP-A2- 0 819 881
- DE-A1- 10 323 324
- DE-A1- 10 350 927

## Beschreibung

Die Erfindung betrifft ein Lichtgitter gemäß dem Oberbegriff des Anspruchs 1.

Ein derartiges Lichtgitter ist aus der DE 39 39 191 A1 bekannt. Das dort beschriebene Lichtgitter weist als Sender eine Reihenanordnung von periodisch und zyklisch nacheinander eingeschalteten Infrarot-Sendedioden auf, die PulsPausen-modulierte Impulse mit einer Kennung aussenden, wobei die Kennung einer ausgewählten Infrarot-Sendediode unterschiedlich gegenüber der Kennung der übrigen Infrarot-Sendedioden ist. Als Empfänger ist eine entsprechende Reihenanordnung von periodisch und zyklisch aktivierten, von einem freilaufenden Oszillator getakteten Photodioden vorgesehen, von denen jede einer der Infrarot-Sendedioden zugeordnet ist. In einer Auswerteeinheit wird ein Signal "Schutzfeld nicht frei" erzeugt, wenn mindestens ein Lichtstrahl vom Sender zum Empfänger unterbrochen ist. Weiterhin synchronisiert die Auswerteeinheit die zyklische Aktivierung der Photodioden des Empfängers aufgrund der von der ausgewählten Infrarot-Sendediode empfangenen Kennung mit dem Sender.

Die Sender dieses Lichtgitters werden über ein rückgekoppeltes Schieberegister zyklisch einzeln nacheinander aktiviert. Um einen fehlersicheren Betrieb zu gewährleisten wird mittels einer integrierten Fehlererkennungsschaltung der korrekte Betrieb dieses Schieberegisters kontrolliert.

Die Empfänger werden ebenfalls durch Schieberegister zyklisch aktiviert, wobei die Funktion der Schieberegister in der zweikanalig ausgebildeten Auswerteeinheit kontrolliert wird.

Nachteilig bei diesem Lichtgitter ist, dass dieses nur auf den ausgewählten Sender synchronisiert werden kann, der eine Kennung aussendet, die sich von der weiteren Kennung, die den Sendelichtstrahlen aller übrigen Sender aufgeprägt ist, unterscheidet. Bei einem Lichtgitter mit Muting- oder Blankingfunktion werden typischerweise vorgegebene Strahlachsen ausgeblendet, die nicht zur Objektdetektion verwendet werden. Diese Strahlachsen können oder müssen sogar dauernd unterbrochen sein. Bei dem Lichtgitter gemäß der DE 39 39 191 A1 kann damit die Strahlachse des ausgewählten Senders generell nicht zur Ausbildung von Blanking- oder Mutingbereichen genutzt werden, da diese ansonsten nicht mehr zur Synchronisierung des Lichtgitters genutzt werden kann, so dass dann ein Betrieb des Lichtgitters nicht mehr möglich wäre.

Ein weiterer Nachteil dieses Lichtgitters besteht darin, dass der Schaltungsaufwand zur Gewährleistung eines fehlersicheren Betriebs, das heißt einer für den Einsatz des Lichtgitters im Bereich der Sicherheitstechnik notwendigen Fehlerüberwachung, unerwünscht groß ist.

Die DE 103 50 927 A1 betrifft ein Lichtgitter zur Erfassung von Objekten in einem Überwachungsbereich mit einer Sendereinheit mit einer Anzahl von Sendelichtstrahlen emittierenden Sendern, mit einer Empfängereinheit mit einer Anzahl von Empfängern, wobei jedem Sender ein Empfänger zur Bildung einer Strahlachse zugeordnet ist, so dass bei freiem Strahlengang die von dem jeweiligen Sendern emittierten Sendelichtstrahlen auf den zugeordneten Empfänger geführt sind, und mit einer Auswerteeinheit zur Auswertung der an den Empfängern anstehenden Empfangssignale, wobei in dieser bei einer durch einen Objekteingriff im Überwachungsbereich bedingten Unterbrechung wenigstens einer Strahlachse ein Objektfeststellungssignal generiert wird. Die Auswerteeinheit ist von einem digitalen Signalprozessor gebildet.

Die DE 103 23 324 A1 betrifft einen optischen Sensor zur Erfassung von Objekten in einem Überwachungsbereich mit wenigstens einem Sendelichtstrahlen emittierenden Sender, wenigstens einem Empfangslichtstrahlen empfangenden Empfänger und mit einer Auswerteeinheit, in welcher in Abhängigkeit der Empfangssignale am Ausgang des Empfängers ein Schaltsignal generiert wird, welches über wenigstens einen Sicherheitsschaltausgang zur Steuerung eines Arbeitsgerätes ausgegeben wird. In der Auswerteeinheit wird wenigstens ein Meldesignal generiert, an einen einkanaligen Meldeausgang ausgelesen, in die Auswerteeinheit rückgelesen und dort mit vorgegebenen Sollwerten verglichen. Bei einer Abweichung der Istwerte von den Sollwerten wird in der Auswerteeinheit ein Deaktivierungssignal für den Sicherheitsschaltausgang und/oder den Meldeausgang generiert.

Die EP 0 819 881 A2 betrifft ein Schutzsystem mit zwei Microcontrollern und einem Lichtvorhang. Die Microcontroller führen Überwachungsroutinen für eine Fehlerkontrolle durch. Eine Fehlerkontrolle besteht darin, dass ein Microcontroller einen Sender mit einem Fehlersignal ansteuert, worauf kontrolliert wird, ob das Fehlersignal empfangsseitig registriert wird.

Der Erfindung liegt die Aufgabe zugrunde ein Lichtgitter der eingangs genannten Art bereitzustellen, bei welchem mit geringem konstruktivem Aufwand ein fehlersicherer Betrieb gewährleistet ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Lichtgitter dient zur Erfassung von Objekten in einem Überwachungsbereich und umfasst eine vorgegebene Anzahl von Sendelichtstrahlen emittierenden Sendern und Empfängern, wobei jeweils ein Sender und ein diesem Sender zugeordneter Empfänger eine Strahlachse bilden. In einer Auswerteeinheit wird in Abhängigkeit von an den Ausgängen der Empfänger anstehenden Empfangssignalen ein Objektfeststellungssignal generiert. Die einzelnen Sender werden zyklisch einzeln nacheinander aktiviert, wobei den Sendelichtstrahlen der einzelnen Sender diese eindeutig kennzeichnende Codes aufgeprägt sind. Die Empfänger sind gleichzeitig aktiviert, wobei deren Empfangssignale parallel auf separate Eingänge der Auswerteeinheit geführt sind. In der Auswerteeinheit werden jeweils nur die Empfangssignale des dem jeweils aktiven Sender zugeordneten Empfänger registriert und abgespeichert, indem die Eingänge, auf welche die Empfangssignale der übrigen Empfänger geführt sind, stummgeschaltet werden. In der Auswerteeinheit wird durch Auswertung der gespeicherten Empfangssignale die Korrektheit der von den Sendern ausgesandten Codes und deren Reihenfolge überprüft.

Bei dem erfindungsgemäßen Lichtgitter sind sämtliche sicherheitsrelevanten Funktionen in der empfängerseitigen Auswerteeinheit integriert, so dass mit einem geringen Schaltungsaufwand ein fehlersicherer Betrieb des Lichtgitters gewährleistet wird, der den Einsatz des Lichtgitters im Bereich der Sicherheitstechnik ermöglicht.

Dadurch ergibt sich als wesentlicher Vorteil des erfindungsgemäßen Lichtgitters, dass senderseitig keine sichere Ansteuerung sowie Codegenerierung für die einzelnen Sender benötigt wird, so dass die senderseitige Ansteuerschaltung einen entsprechend einfachen und kostengünstigen Aufbau aufweisen kann.

Dieser einfache Aufbau der senderseitigen Schaltung wird insbesondere dadurch möglich, dass den einzelnen Sendern jeweils ein separater Codegenerator zugeordnet ist, durch welchen den Sendelichtstrahlen der einzelnen Sender eindeutige, individuelle Codes aufgeprägt sind. In der empfängerseitigen Auswerteeinheit der Lichtgitter wird dann geprüft, ob in den einzelnen, jeweils einem Sender zugeordneten Empfänger diese Codes korrekt empfangen werden und ob die Reihenfolge der empfangenen Codes korrekt ist, das heißt der Reihenfolge entspricht, mit der die einzelnen Sender die Sendelichtstrahlen mit den einzelnen Codes emittieren. Voraussetzung hierfür ist, dass die einzelnen Codes der Auswerteeinheit bekannt sind. Zweckmäßigerweise werden hierzu die Codes vor Inbetriebnahme der Lichtgitter in die Auswerteeinheit einprogrammiert oder in einem Kalibriervorgang eingelernt.

Bei dem erfindungsgemäßen Lichtgitter sind die Empfänger gleichzeitig aktiviert und die Empfangssignale der Empfänger werden parallel über separate Eingänge in der Auswerteeinheit eingelesen. Damit jeweils bei Aktivierung eines bestimmten Senders nur die Empfangssignale des zugeordneten Empfängers ausgewertet werden, wird in der Auswerteeinheit bei Aktivierung eines Senders nur der Eingang der Auswerteeinheit, auf welche die Empfangssignale des zugeordneten Senders geführt sind, aktiviert, während alle anderen Eingänge, auf welche die Empfangssignale der übrigen Empfänger geführt sind, stummgeschaltet werden.

Ein wesentlicher Vorteil dieser empfangsseitigen Schaltungsanordnung besteht darin, dass aufwendige Schieberregisterschaltungen, die bei bekannten Lichtgittern notwendig sind, um die Empfänger zyklisch einzeln nacheinander zu aktivieren, entfallen können.

Da die Empfangssignale der Empfänger ohne Schieberregisterschaltungen oder dergleichen direkt in die Auswerteeinheit eingelesen werden können, werden nur wenige Leitungen benötigt, was nicht nur zu einer Kosteneinsparung sondern auch zu einer erhöhten EMV-Störfestigkeit führt.

Zur Erfüllung der Anforderungen für einen Einsatz im Bereich der Sicherheitstechnik erfolgt in der Auswerteeinheit eine fehlersichere Auswertung der Empfangssignale, wobei die Auswerteeinheit hierfür vorteilhaft einen zweikanaligen Aufbau aufweist. Besonders vorteilhaft besteht die Auswerteeinheit aus zwei sich gegenseitig überwachenden Microcontrollern.

Die sicherheitsrelevanten Funktionen der Lichtgitter können somit in der Software der Microcontroller implementiert werden. Die Hardware in Form der beiden Microcontrollern weist einen besonders einfachen und störungsunanfälligen Aufbau auf.

Die Empfangssignale der Empfänger werden parallel in beide Microcontroller eingelesen, wobei hierzu Ports der Microcontroller genutzt werden, die sowohl als Eingänge als auch als Ausgänge betrieben werden können. Hierbei wird der Eingang des Microcontrollers kontrolliert auf Massepotential geschaltet, in dessen Folge auch die entsprechenden Empfängerausgänge auf Massepotential geschaltet sind.

Das Stummschalten der Ports kann intern in den Microcontrollern oder über separate Ports der Microcontroller erfolgen. Im letzteren Fall kann durch eine Dynamisierung der Ports derart, dass diese alternierend zum Einlesen von Empfangssignalen oder zum Stummschalten weiterer Ports dienen, die Fehlersicherheit weiter erhöht werden, da so ein Festkleben, das heißt eine Fehlfunktion einzelner Ports aufgedeckt werden kann.

Ein wesentlicher Vorteil des Stummschaltens von Ports der Microcontroller beziehungsweise Eingängen der Auswerteeinheit besteht darin, dass Querschlüsse zwischen den Leitungen, über welche die Empfangssignale der Empfänger der Auswerteeinheit beziehungsweise den beiden Microcontrollern zugeführt werden, nicht zu Fehlfunktionen des Lichtgitters führen. Da nämlich nur jeweils der Eingang der Auswerteeinheit aktiviert ist, auf welchen die Empfangssignale des Empfängers geführt sind, welcher dem aktivierten Sender zugeordnet sind, alle anderen Eingänge der Auswerteeinheit jedoch stummgeschaltet sind, wird vermieden, dass ein Empfangssignal über einen Querschluss über einen falschen Eingang eingelesen und dann ausgewertet wird. Liegt der Querschluss an der Leitung an, über welche aktuell die Empfangssignale eingelesen werden sollten, so wird in diesem Fall dort kein Code empfangen und eine entsprechende Fehlermeldung generiert, das heißt das System geht in den sicheren Zustand über.

Ein weiterer wesentlicher Vorteil des erfindungsgemäßen Lichtgitters besteht darin, dass dieses nicht nur auf eine fest vorgegebene Strahlachse sondern auf unterschiedliche Strahlachsen synchronisiert werden kann. Dies beruht darauf, dass den Sendelichtstrahlen der Sender unterschiedliche Codes aufgeprägt sind, durch welche die einzelnen Strahlachsen in der Auswerteeinheit eindeutig identifiziert werden können. Damit kann jede Strahlachse zur Synchronisierung der Lichtgitter verwendet werden, wodurch deren Verfügbarkeit erheblich erweitert wird.

Besonders vorteilhaft ist zur Synchronisation des Lichtgitters nur ein beliebiger Eingang der Auswerteeinheit aktiviert, über welchen die Empfangssignale eines Empfängers in die Auswerteeinheit eingelesen werden. Dieser Aktivierungszustand bleibt solange erhalten, bis am Eingang der Codes des dem zugeordneten Senders empfangen wird. Darauf werden zyklisch einzeln nacheinander im Takt der Senderaktivierung alle Eingänge der Auswerteeinheit, auf welche die Empfangssignale der Empfänger geführt sind, aktiviert.

Wird das Lichtgitter beispielsweise in einem Blanking Betrieb betrieben, so dass der zur Synchronisierung zunächst ausgewählte Empfänger den Code des zugeordneten Senders nicht empfangen kann, da die Strahlachse dauerhaft durch ein Hindernis unterbrochen ist, so kann nach Ablauf einer vorgegebenen Zeitspanne ein nächster Empfänger zur Synchronisation des Lichtgitters herangezogen werden.

Die Erfindung wird im Nachstehenden anhand der Zeichnungen erläutert. Es zeigen:
- Figur 1:: Schematische Darstellung der mechanischen und optischen Komponenten eines Lichtgitters.
- Figur 2:: Schematische Darstellung der elektronischen und optoelektronischen Komponenten des Lichtgitters gemäß Figur 1.

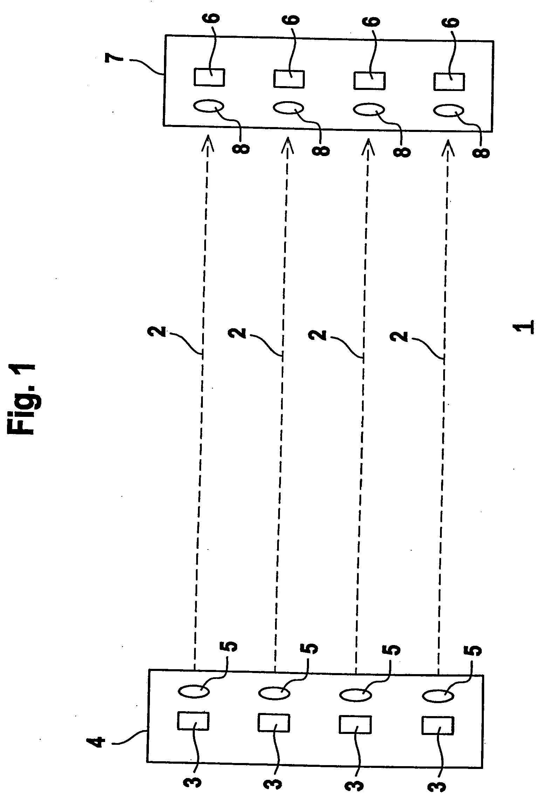

Figur 1 zeigt schematisch den optomechanischen Aufbau eines Lichtgitters 1 zur Erfassung von Objekten in einem Überwachungsbereich. Das Lichtgitter 1 umfasst eine Reihenanordnung von Sendelichtstrahlen 2 emittierenden Sendern 3, die in einem ersten Gehäuse 4 untergebracht sind. Die Sender 3 bestehen jeweils aus einer Leuchtdiode. Jedem Sender 3 ist eine Sendeoptik 5 in Form einer Linse zur Strahlformung der Sendelichtstrahlen 2 nachgeordnet. Das Lichtgitter 1 umfasst weiterhin eine Reihenanordnung von Empfängern 6, die in einem zweiten Gehäuse 7 integriert sind. Jedem Empfänger 6 ist eine Empfangsoptik 8 in Form einer Linse vorgeordnet, die zur Fokussierung von auftreffenden Sendelichtstrahlen 2 auf den Empfänger 6 dient.

Die Gehäuse 4 des Lichtgitters 1 sind an gegenüberliegenden Rändern des Überwachungsbereichs angeordnet. Die Sender 3 in ersten Gehäuse 4 und die Empfänger 6 im zweiten Gehäuse 4 sind jeweils in äquidistanten Abständen so zueinander angeordnet, dass bei freiem Überwachungsbereich die Sendelichtstrahlen 2 eines Senders 3 auf den einen zugeordneten Empfänger 6 treffen. Diese Sender- und Empfängerpaare bilden einzelne Strahlachsen des Lichtgitters 1. Im vorliegenden Fall weist das Lichtgitter 1 vier Strahlachsen, das heißt vier Sender-Empfängerpaare auf.

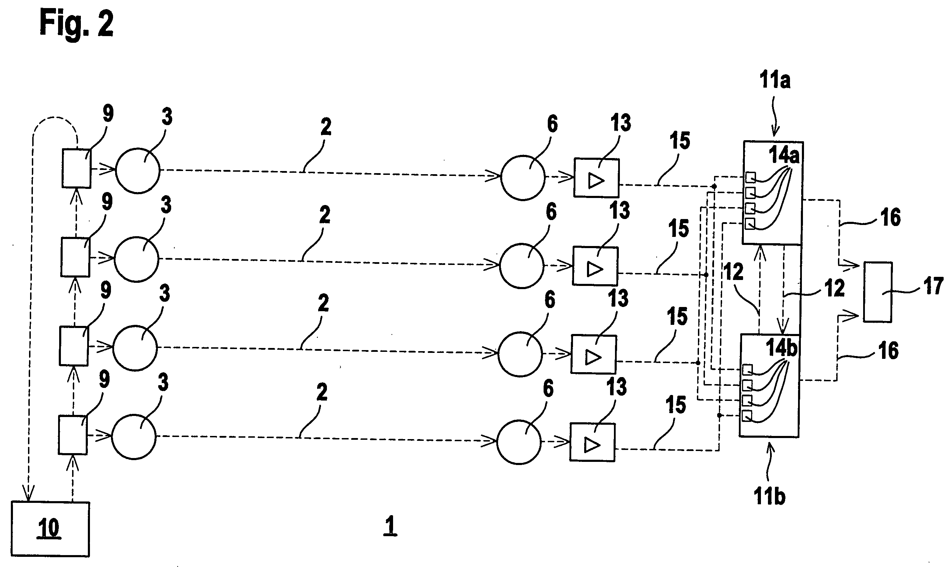

Figur 2 zeigt die elektronischen und optoelektronischen Komponenten des Lichtgitters 1 gemäß Figur 1. Bei der senderseitigen Schaltungsanordnung des Lichtgitters 1 ist jedem Sender 3 ein Codegenerator 9 zugeordnet. Mittels eines Codegenerators 9 wird den Sendelichtstrahlen 2 des jeweils zugeordneten Senders 3 ein Code aufgeprägt. Der Codegenerator 9 ist in einem Prozessor integriert. Dabei unterscheiden sich die Codes für die einzelnen Sender 3, so dass die Strahlachsen anhand der Codes eindeutig identifizierbar sind.

Die einzelnen Sender 3 werden über eine Startschaltung 10 in einem vorgegebenen Sendetakt zyklisch einzeln nacheinander aktiviert. Die Weiterleitung der Strahlaktivierung erfolgt bevorzugt jeweils durch ein Strahlaktivierungssignal des vorher aktivierten Strahls, das heißt des Prozessor des Senders 3 dieser Strahlachse aktiviert den Sender 3 der nächsten Strahlachse. Die Dauer der Aktivierung der einzelnen Sender 3 ist in den Prozessoren dieser Sender 3 jeweils hinterlegt. Auch für den Fall, dass das Lichtgitter 1 im Bereich des Personenschutzes, das heißt im Bereich der Sicherheitstechnik eingesetzt wird, kann eine nicht geprüfte senderseitige Steuerschaltung eingesetzt werden, da, wie im Folgenden dargelegt wird, die empfängerseitige Schaltungsanordnung sämtliche Sicherheitsfunktionen zur Gewährleistung des geforderten Sicherheitsniveaus übernimmt.

Diese empfängerseitige Schaltungsanordnung umfasst zur fehlersicheren Auswertung der an den Ausgängen der Empfänger 6 anstehenden Empfangssignale eine einen zweikanaligen Aufbau aufweisende Auswerteeinheit. Die Auswerteeinheit besteht im vorliegenden Fall aus zwei identisch ausgebildeten, sich gegenseitig zyklisch überwachenden Microcontrollern 11a, 11b. Diese sind hierzu über Leitungen 12 miteinander verbunden. Alternativ kann als Auswerteeinheit ein Microcontroller vorgesehen sein, der mit einer einen Überwachungskanal bildenden Überwachungseinheit kontrolliert wird.

Jedem Empfänger 6 ist ein separater Verstärker nachgeordnet. Mittels der Verstärker 13 werden digitale Signalpegel der Empfangssignale generiert, die unmittelbar in den Microcontrollern 11a, 11b ausgewertet werden können. Wie aus Figur 2 ersichtlich, werden die mittels der Verstärker 13 verstärkten Empfangssignale parallel über separate Ports 14a, 14b der beiden Microcontroller 11a, 11b eingelesen. Hierzu sind entsprechende Portleitungen 15 von den Ausgängen der Empfänger 6 auf die Ports 14a, 14b der beiden Microcontrollern 11a, 11b geführt. Während des Betriebs des Lichtgitters 1 können somit die einzelnen Empfänger 6 dauernd aktiv sein, so dass deren Empfangssignale simultan über die Ports 14a, 14b in beide Microcontroller 11a, 11b eingelesen werden.

An Ausgänge der Microcontroller 11a, 11b ist über weitere Leitungen 16 eine Ausgangsschaltung 17 mit einem oder mehreren Schaltausgängen angeschlossen, über welche ein in der Auswerteeinheit generiertes Objektfeststellungssignal ausgebbar ist, dessen Schaltzustände angeben, ob sich ein Objekt im Überwachungsbereich befindet oder nicht.

Dabei gilt ein Objekt als erkannt, wenn wenigstens eine Strahlachse des Lichtgitters 1 unterbrochen ist, so dass die Sendelichtstrahlen 2 nicht mehr auf den Empfänger 6 dieser Strahlachse gelangen.

Bei Einsätzen im Bereich der Sicherheitstechnik wird mit dem Lichtgitter 1 typischerweise ein Gefahrenbereich einer Maschine überwacht. Dabei wird das in dem Lichtgitter 1 generierte Objektfeststellungssignal an die Steuerung der Maschine ausgelesen. Die Maschine wird nur dann in Betrieb gesetzt, wenn mit dem Lichtgitter 1 bei fehlerfreier Funktion ein freier Überwachungsbereich detektiert wird. Ansonsten wird die Maschine außer Betrieb gesetzt.

Die Ports 14a, 14b der Microcontroller 11a, 11b, über welche insbesondere die Empfangssignale der Empfänger 6 eingelesen werden, können wahlweise als Eingänge oder Ausgänge betrieben werden. Vorzugsweise weisen die Microcontroller 11a, 11b sogenannte Tristate-Ports mit drei Zuständen (Eingang, Ausgang, hochohmige Beschaltung) auf.

Während des Arbeitsbetriebs des Lichtgitters 1 werden die Sender 3 im Sendetakt einzeln nacheinander aktiviert. Empfangsseitig bleiben jedoch die Empfänger 6 dauernd aktiviert und die Empfangssignale der Empfänger 6 werden parallel auf die Ports 14a, 14b beider Microcontroller 11a, 11b geführt.

Zur Gewährleistung der sicherheitstechnischen Anforderungen wird jedoch jeweils nur derjenige Port 14a, 14b eines Microcontrollers 11a, 11b aktiviert, auf welchen die Empfangssignale des Empfängers 6 geführt sind, der dem jeweils aktiven Sender 3 zugeordnet ist. Die anderen Ports 14a, 14b der Microcontroller 11a, 11b werden stummgeschaltet derart, dass über diese die Empfangssignale der anderen Empfänger 6 nicht in die Microcontroller 11a, 11b eingelesen werden. Dies kann einerseits dadurch erreicht werden, dass diese Ports 14a, 14b und Portleitungen 15 zu den Empfängerausgängen auf Massepotential gezogen werden. Der korrekte Schaltvorgang wird durch den Microcontroller 11a, 11b selbst kontrolliert. Alternativ können die Ports 14a, 14b auf Betriebsspannungspotential gezogen werden.

Die Stummschaltung der einzelnen Ports 14a, 14b beziehungsweise Portleitungen 15 kann intern über die Microcontroller 11 a, 11b selbst erfolgen. Alternativ kann jedem Port 14a, 14b eines Microcontrollers 11a, 11b, auf welchen ein Empfangssignal geführt ist, ein weiterer Port zu deren Stummschaltung zugeordnet sein. Besonders vorteilhaft kann dabei die Funktion der Ports 14a, 14b dieses Port-Paares zyklisch getauscht werden, wodurch statische Fehler, wie das Festkleben eines Ports 14a, 14b aufgedeckt werden können.

Durch dieses Stummschalten der Ports 14a, 14b ist gewährleistet, dass, obwohl alle Empfänger dauernd aktiv sind, trotzdem im Sendeakt der Senderaktivierung jeweils nur die Empfangssignale des Empfängers 6 in den Microcontrollern 11a, 11b ausgewertet werden, die von dem Empfänger 6 stammen, welche dem jeweils aktiven Sender 3 zugeordnet ist.

Voraussetzung hierbei ist, das die Stummschaltung der Ports 14a, 14b der Microcontroller 11a, 11b im Sendeakt der Sender 3 erfolgt. Weiterhin ist zu Beginn eines Arbeitszyklus eine optische Aufsynchronisation der Empfänger 6 auf die Sender 3 des Lichtgitters 1 erforderlich. Hierzu kann, da den Sendelichtstrahlen 2 der Sender 3 eindeutige Codes aufgeprägt sind, eine beliebige Strahlachse des Lichtgitters 1 verwendet werden.

Die Synchronisation des Lichtgitters 1 erfolgt dabei derart, dass nur ein Eingang der Auswerteeinheit beziehungsweise jeweils ein Port 14a, 14b der Microcontroller 11a, 11b, welche einem Empfänger 6 zugeordnet sind, aktiviert ist, wobei die den weiteren Empfängern 6 zugeordneten Eingänge der Ports 14a, 14b stummgeschaltet sind. Dieser Aktivierungszustand der Empfänger 6 bleibt solange erhalten, bis mit dem Empfänger 6, dessen Empfangssignale auf die aktiven Ports 14a, 14b geführt sind, der Code des ihm zugeordneten Senders 3 empfangen wird. Voraussetzung hierfür ist, dass die Codes der Sender 3 für die zugeordneten Empfänger 6 vor Inbetriebnahme der Lichtgitter 1 in die Auswerteeinheit einprogrammiert oder eingelernt wurden. Danach kann der Arbeitsbetrieb des Lichtgitters 1 aufgenommen werden, indem die Sender 3 im Sendetakt aktiviert werden sind synchron hierzu die Stummschaltung der Ports 14a, 14b der Microcontroller 11a, 11b derart erfolgt, dass immer nur die Ports 14a, 14b der Microcontroller 11a, 11b aktiv, das heißt nicht stummgeschaltet sind, auf welche die Empfangssignale des Empfängers 6 geführt sind, der dem jeweils aktiven Sender 3 zugeordnet ist.

Während des Arbeitsbetriebs der Lichtgitter 1 erfolgt die Auswertung der Empfangssignale in den Microcontrollern 11a, 11b derart, dass geprüft wird, ob die Empfänger 6 in der dem Sendetakt entsprechenden Reihenfolge die richtigen Codes, das heißt die Codes der diesen zugeordneten Sender 3 empfangen. Hierzu werden die von den Empfängern 6 empfangenen Codes jeweils in einen Ringspeicher in jedem Microcontroller 11a, 11b eingeschrieben.

Die Inhalte der Ringspeicher werden im Rahmen der gegenseitigen zyklischen Kontrolle miteinander verglichen und auf Gleichheit überprüft.

Ist diese Überprüfung positiv und werden für alle Strahlachsen die Codes der einzelnen Sender 3 in den zugeordneten Empfängern 6 empfangen, so liegt ein fehlerfreier Betrieb des Lichtgitters 1 vor und es liegt ein freier Überwachungsbereich vor. Das Objektfeststellungssignal nimmt dann den Schaltzustand "freier Überwachungsbereich" ein. Durch dieses Objektfeststellungssignal wird der Betrieb der Maschine, deren Gefahrenbereich mit dem Lichtgitter 1 überwacht, freigegeben, das heißt die Maschine wird durch das Objektfeststellungssignal in Betrieb gesetzt.

Dringt ein Objekt in den Überwachungsbereich ein, so wird wenigstens eine Strahlachse unterbrochen, so dass der Empfänger 6 dieser Strahlachse den Code des zugeordneten Senders 3 nicht mehr empfängt. Das Objektfeststellungssignal nimmt dann den Schaltzustand "Objekt erkannt" ein, wodurch die Maschine außer Betrieb gesetzt wird.

Denselben Schaltzustand nimmt das Objektfeststellungssignal an, wenn ein interner Fehler der Lichtgitter 1 in den Microcontrollern 11a, 11b aufgedeckt wird.

Dabei können durch die im Sendetakt erfolgende Stummschaltung von Ports 14a, 14b und Portleitungen 15 der Microcontroller 11a, 11b auch Fehler durch Quer- oder Kurzschlüsse aufgedeckt werden.

Liegt beispielsweise zwischen zwei benachbarten Leitungen 15 ein Querschluss vor, so dass die Empfangssignale eines Empfängers 6 nicht auf den zugeordneten Port 14a, 14b eines Microcontrollers 11a, 11b sondern fälschlicherweise auf den Nachbarport geführt werden, so wird durch die Stummschaltung (zum Beispiel durch Auf-Massepotential ziehen) des Nachbarports verhindert, dass das über den Querschluss fehlgeleitete Empfangssignal in den Microcontrollern 11a, 11b zur Auswertung gelangt. Der aktive Port 14a des Microcontrollers 11a empfängt infolge des Querschlusses das Empfangssignal nicht, während der entsprechende Port 14b des zweiten Microcontrollers 11b das Empfangssignal empfängt. Die Inhalte der Ringspeicher der Microcontroller 11a, 11b sind dann verschieden, was zur Generierung einer Fehlermeldung führt. Aufgrund dessen nimmt dann das Objektfeststellungssignal den Schaltzustand "Objekt erkannt" ein, das heißt das System geht in den sicheren Zustand über, da damit die Maschine außer Betrieb gesetzt wird.

### Bezugszeichenliste

- (1): Lichtgitter
- (2): Sendelichtstrahlen
- (3): Sender
- (4): Gehäuse
- (5): Sendeoptik
- (6): Empfänger
- (7): Gehäuse
- (8): Empfangsoptik
- (9): Codegenerator
- (10): Startschaltung
- (11a): Microcontroller
- (11b): Microcontroller
- (12): Leitung
- (13): Verstärker
- (14a): Port
- (14b): Port
- (15): Portleitung
- (16): Leitung
- (17): Ausgangsschaltung

## Patentansprüche

1. Lichtgitter zur Erfassung von Objekten in einem Überwachungsbereich, mit einer vorgegebenen Anzahl von Sendelichtstrahlen emittierenden Sendern und Empfängern, wobei jeweils ein Sender und ein diesem Sender zugeordneter Empfänger eine Strahlachse bilden, und mit einer Auswerteeinheit, in welcher in Abhängigkeit von an den Ausgängen der Empfänger anstehenden Empfangssignalen ein Objektfeststellungssignal generiert wird, **dadurch gekennzeichnet, dass** die einzelnen Sender (3) zyklisch einzeln nacheinander aktiviert werden und den Sendelichtstrahlen (2) der einzelnen Sender (3) diese eindeutig kennzeichnenden Codes aufgeprägt sind, dass die Empfänger (6) gleichzeitig aktiviert sind und deren Empfangssignale parallel auf separate Eingänge der Auswerteeinheit geführt sind, wobei in der Auswerteeinheit jeweils nur die Empfangssignale des dem jeweils aktiven Sender (3) zugeordneten Empfänger (6) registriert und abgespeichert werden, indem die Eingänge, auf welche die Empfangssignale der übrigen Empfänger (6) geführt sind, stummgeschaltet werden, und dass in der Auswerteeinheit durch Auswertung der gespeicherten Empfangssignale die Korrektheit der von den Sendern (3) ausgesandten Codes und deren Reihenfolge überprüft wird.

2. Lichtgitter nach Anspruch 1, **dadurch gekennzeichnet, dass** jedem Sender (3) ein Codegenerator (9) zur Generierung des den Sendelichtstrahlen (2) des Senders (3) aufgeprägten Codes zugeordnet ist.

3. Lichtgitter nach Anspruch 1 oder 2, **dadurch gekennzeichnet, dass** die Aktivierung der Sender (3) durch Weitergabe eines Signals von Sender zu Sender erfolgt.

4. Lichtgitter nach einem der Ansprüche 1 bis 3, **dadurch gekennzeichnet, dass** in der Auswerteeinheit für jeden Empfänger (6) der Code des zugeordneten Senders (3) hinterlegt ist.

5. Lichtgitter nach einem der Ansprüche 1 bis 4, **dadurch gekennzeichnet, dass** in der Auswerteeinheit eine fehlersichere Auswertung der Empfangssignale erfolgt.

6. Lichtgitter nach Anspruch 5, **dadurch gekennzeichnet, dass** die Auswerteeinheit einen zweikanaligen Aufbau aufweist.

7. Lichtgitter nach Anspruch 6, **dadurch gekennzeichnet, dass** die Auswerteeinheit aus zwei sich gegenseitig überwachenden Microcontrollern (11a, 11b) besteht, wobei die Empfangssignale parallel auf Ports (14a, 14b) beider Microcontroller (11a, 11 b) geführt sind.

8. Lichtgitter nach Anspruch 7, **dadurch gekennzeichnet, dass** die Ports (14a, 14b) der Microcontroller (11a, 11b) wahlweise als Eingänge oder Ausgänge betreibbar sind.

9. Lichtgitter nach einem der Ansprüche 7 oder 8, **dadurch gekennzeichnet, dass** jeder Microcontroller (11a, 11b) einen Ringspeicher aufweist, wobei in die Ringspeicher fortlaufend die von den einzelnen Empfängern (6) empfangenen Codes des zugeordneten Senders (3) eingeschrieben werden.

10. Lichtgitter nach Anspruch 9, **dadurch gekennzeichnet, dass** die Inhalte der Ringspeicher der Microcontroller (11a, 11b) auf Gleichheit überprüft werden.

11. Lichtgitter nach einem der Ansprüche 7 bis 10, **dadurch gekennzeichnet, dass** zur Stummschaltung eines Ports (14a, 14b) die jeweilige Portleitung auf Massepotential gesetzt ist.

12. Lichtgitter nach einem der Ansprüche 7 bis 10, **dadurch gekennzeichnet, dass** zur Stummschaltung eines Ports (14a, 14b) dieser auf Betriebsspannungspotential gesetzt ist.

13. Lichtgitter nach einem der Ansprüche 11 oder 12, **dadurch gekennzeichnet, dass** die Stummschaltung intern im jeweiligen Microcontroller (11a, 11b) erfolgt.

14. Lichtgitter nach einem der Ansprüche 11 oder 12, **dadurch gekennzeichnet, dass** zur Stummschaltung eines Ports (14a, b) ein weiterer Port verwendet wird.

15. Lichtgitter nach Anspruch 14, **dadurch gekennzeichnet, dass** ein erster und zweiter Port (14a, 14b) alternierend zum Einlesen von Empfangssignalen und zum Stummschalten des jeweils anderen Ports (14a, 14b) betrieben wird.

16. Lichtgitter nach einem der Ansprüche 13 bis 15, **dadurch gekennzeichnet, dass** bei der Stummschaltung der Status des jeweiligen Ports (14a, 14b) durch Rücklesen kontrolliert wird.

17. Lichtgitter nach einem der Ansprüche 1 bis 16, **dadurch gekennzeichnet, dass** zu dessen Synchronisation nur ein Eingang der Auswerteeinheit aktiviert ist, über welchen die Empfangssignale eines Empfängers (6) in die Auswerteeinheit eingelesen werden, wobei dieser Aktivierungszustand solange erhalten bleibt, bis am Eingang der Code des zugeordneten Senders (3) empfangen wird, und dass darauf zyklisch einzeln nacheinander im Takt der Senderaktivierung alle Eingänge der Auswerteeinheit, auf welche die Empfangssignale der Empfänger (6) geführt sind, aktiviert werden.

## Claims

1. Light grating for detection of objects in a monitoring region, comprising a predetermined number of transmitters, which emit transmitted light beams, and receivers, wherein each transmitter and a receiver associated therewith define a beam axis, and an evaluating unit, in which an object detection signal is generated in dependence on received signals present at the outputs of the receivers, **characterised in that** the individual transmitters (3) are cyclically activated individually in succession and codes uniquely identifying the transmitted light beams (2) of the individual transmitters (3) are imposed on the beams, that the receivers (6) are activated simultaneously and the received signals thereof are conducted parallelly to separate inputs of the evaluating unit, wherein only the received signals of the receivers (6) associated with the respectively active transmitter (3) are registered and stored each time in the evaluating unit **in that** the inputs to which the received signals of the remaining receivers (6) are conducted are switched to be mute, and that the correctness of the codes transmitted by the transmitters (3) and the sequence thereof are checked in the evaluating unit by evaluation of the stored received signals.

2. Light grating according to claim 1, **characterised in that** a code generator (9) for generating the code imposed on the transmitted light beams (2) of the transmitter (3) is associated with each transmitter (3).

3. Light grating according to claim 1 or 2, **characterised in that** the activation of the transmitter (3) is carried out by reproducing a signal from transmitter to transmitter.

4. Light grating according to any one of claims 1 to 3, **characterised in that** the code of the associated transmitter (3) is filed in the evaluating unit for each receiver (6).

5. Light grating according to any one of claims 1 to 4, **characterised in that** an error-secure evaluation of the received signals is carried out in the evaluating unit.

6. Light grating according to claim 5, **characterised in that** the evaluating unit has a two-channel format.

7. Light grating according to claim 6, **characterised in that** the evaluating unit consists of two mutually monitoring microcontrollers (11 a, 11 b), wherein the received signals are conducted in parallel to ports (14a, 14b) of the two microcontrollers (11 a, 11b).

8. Light grating according to claim 7, **characterised in that** the ports (14a, 14b) of the microcontrollers (11 a, 11 b) are selectably operable as inputs or outputs.

9. Light grating according to one of claims 7 and 8, **characterised in that** each microcontroller (11 a, 11 b) has a ring memory, wherein the codes, which are received by the individual receivers (6), of the associated transmitter (3) are continuously written into the ring memory.

10. Light grating according to claim 9, **characterised in that** the contents of the ring memories of the microcontrollers (11 a, 11 b) are checked for equivalence.

11. Light grating according to any one of claims 7 to 10, **characterised in that** for switching of a port (14a, 14b) to be mute the respective port line is set to ground potential.

12. Light grating according to any one of claims 7 to 10, **characterised in that** for switching a port (14a, 14b) to be mute this is set to operating voltage potential.

13. Light grating according to one of claims 11 and 12, **characterised in that** the switching to be mute is carried out internally in the respective microcontroller (11 a, 11 b).

14. Light grating according to one of claims 11 and 12, **characterised in that** a further port is used for the switching of a port (14a, b) to be mute.

15. Light grating according to claim 14, **characterised in that** a first port (14a) and a second port (14b) are operated in alternation for reading-in received signals and for switching the respective other port (14a, 14b) to be mute.

16. Light grating according to any one of claims 13 to 15, **characterised in that** in the case of switching to be mute the status of the respective port (14a, 14b) is checked by reading back.

17. Light grating according to any one of claims 1 to 16, **characterised in that** for synchronisation thereof only one input of the evaluating unit is activated, by way of which the received signals of a receiver (6) are read into the evaluating unit, wherein this activation state is maintained until the code of the associated transmitter (3) is received at the input, and thereupon all inputs of the evaluating unit to which the received signals of the receivers (6) are conducted are activated cyclically individually in succession with the frequency of the transmitter activation.

## Revendications

1. Barrière lumineuse pour la détection d'objets dans une zone de surveillance, comportant un nombre prédéfini d'émetteurs émettant des rayons lumineux d'émission et de récepteurs, un émetteur et un récepteur associé à cet émetteur formant chaque fois un axe de faisceau, et comportant une unité d'évaluation dans laquelle un signal de détection d'objet est généré en fonction des signaux de réception présents aux sorties des récepteurs, **caractérisée en ce que** les différents émetteurs (3) sont activés cycliquement l'un après l'autre et que des codes qui identifient sans équivoque les différents émetteurs (3) sont appliqués aux rayons lumineux d'émission (2) de ces émetteurs, que les récepteurs (6) sont activés en même temps et leurs signaux de réception guidés en parallèle vers des entrées séparées de l'unité d'évaluation, seuls les signaux de réception du récepteur (6) associé à l'émetteur (3) actif étant chaque fois enregistrés et mémorisés dans l'unité d'évaluation, les entrées vers lesquelles sont guidés les signaux de réception des autres récepteurs (6) étant désactivées, et que la justesse des codes envoyés par les émetteurs (3) et leur ordre sont vérifiés dans l'unité d'évaluation par évaluation des signaux de réception mémorisés.

2. Barrière lumineuse selon la revendication 1, **caractérisée en ce qu'**à chaque émetteur (3) est associé un générateur de code (9) pour générer le code appliqué aux rayons lumineux d'émission (2) de l'émetteur (3).

3. Barrière lumineuse selon l'une des revendications 1 ou 2, **caractérisée en ce que** l'activation des émetteurs (3) s'effectue par transmission d'un signal d'émetteur à émetteur.

4. Barrière lumineuse selon l'une des revendications 1 à 3, **caractérisée en ce que**, pour chaque récepteur (6), le code de l'émetteur (3) associé est stocké dans l'unité d'évaluation.

5. Barrière lumineuse selon l'une des revendications 1 à 4, **caractérisée en ce qu'**une évaluation des signaux de réception protégée contre les erreurs est effectuée dans l'unité d'évaluation.

6. Barrière lumineuse selon la revendication 5, **caractérisée en ce que** l'unité d'évaluation présente une structure à deux canaux.

7. Barrière lumineuse selon la revendication 6, **caractérisée en ce que** l'unité d'évaluation est constituée de deux microcontrôleurs (11a, 11b) se surveillant mutuellement, les signaux de réception étant guidés en parallèle vers les ports (14a, 14b) des deux microcontrôleurs (11a, 11b).

8. Barrière lumineuse selon la revendication 7, **caractérisée en ce que** les ports (14a, 14b) des microcontrôleurs (11a, 11b) peuvent fonctionner au choix comme entrées ou sorties.

9. Barrière lumineuse selon l'une des revendications 7 ou 8, **caractérisée en ce que** chaque microcontrôleur (11a, 11b) présente une mémoire circulaire dans laquelle sont écrits en continu les codes que les différents récepteurs (6) reçoivent de l'émetteur (3) qui leur est associé.

10. Barrière lumineuse selon la revendication 9, **caractérisée en ce que** l'égalité des contenus des mémoires circulaires des microcontrôleurs (11a, 11b) est vérifiée.

11. Barrière lumineuse selon l'une des revendications 7 à 10, **caractérisée en ce que** pour désactiver un port (14a, 14b), la ligne de port respective est mise au potentiel de la masse.

12. Barrière lumineuse selon l'une des revendications 7 bis 10, **caractérisée en ce que** pour désactiver un port (14a, 14b), celui-ci est mis au potentiel de la tension de service.

13. Barrière lumineuse selon l'une des revendications 11 ou 12, **caractérisée en ce que** la désactivation s'effectue de manière interne dans le microcontrôleur (11a, 11b) respectif.

14. Barrière lumineuse selon l'une des revendications 11 ou 12, **caractérisée en ce qu'**un autre port est utilisé pour la désactivation d'un port (14a, b).

15. Barrière lumineuse selon la revendication 14, **caractérisée en ce qu'**un premier et un deuxième port (14a, 14b) sont utilisés en alternance pour lire les signaux de réception et pour désactiver l'autre port (14a, 14b) respectif.

16. Barrière lumineuse selon l'une des revendications 13 à 15, **caractérisée en ce que** lors de la désactivation, le statut du port (14a, 14b) respectif est contrôlé par relecture.

17. Barrière lumineuse selon l'une des revendications 1 à 16, **caractérisée en ce que** pour sa synchronisation, seulement une entrée de l'unité d'évaluation est activée, par laquelle les signaux de réception d'un récepteur (6) sont lus dans l'unité d'évaluation, cet état d'activation étant maintenu jusqu'à ce que le code de l'émetteur (3) associé soit reçu à l'entrée, et qu'ensuite toutes les entrées de l'unité d'évaluation vers lesquelles les signaux de réception des récepteurs (6) sont guidés sont activées cycliquement l'une après l'autre au rythme de l'activation des émetteurs.
